# EUROPEAN PATENT APPLICATION

(11) **EP 4 213 377 A1**
(43) Date of publication of application: **19.07.2023**
(21) Application number: 20952195.4
(22) Date of filing: 27.10.2020
(51) Int. Cl.: H02S 30/10, H02S 20/00

(54) **SIMPLE AND EFFICIENT PRESS BLOCK STRUCTURE AND IMPLEMENTATION METHOD THEREFOR**

(30) Priority: 07.09.2020 CN 202010927672
(71) Applicant: Hengdian Group DMEGC Magnetics Co., Ltd., Jinhua, Zhejiang 322118 (CN)
(72) Inventor: LOU, Caoxin, Jinhua, Zhejiang 322118 (CN); AI, Ruiyang, Jinhua, Zhejiang 322118 (CN); HE, Yue, Jinhua, Zhejiang 322118 (CN); WANG, Tingting, Jinhua, Zhejiang 322118 (CN); LI, Chunhui, Jinhua, Zhejiang 322118 (CN); ZHAO, Lin, Jinhua, Zhejiang 322118 (CN)
(74) Representative: Ström & Gulliksson AB
(86) International application number: PCT/CN2020/123933
(87) International publication number: WO 2022/047953

(57) **Abstract**

Disclosed in the present invention is a simple and efficient press block structure, comprising a press block body, an upper surface and a lower surface of two ends of the press block body being respectively provided with dense toothed grooves, and a through hole being provided in the middle of the press block body. Also disclosed in the present invention is a method for implementing a simple and efficient press block structure. In the present invention, the press block body can be suitable for fixing a single frame or two frames, having better adaptability; the press block structure in the present invention is connected to a lower end of the frame, thus avoiding the effect of the thickness of the frame, being suitable for installing photovoltaic assemblies of various frame thicknesses, and reducing the types of the press block body; in addition, the press block structure can be prevented from being pressed above the photovoltaic assemblies, thereby avoiding glass bursting of the photovoltaic assemblies caused by too tight pressing during installation.

## Description

### Field of the Invention

The present disclosure relates to the technical field of photovoltaic module installation, and in particular, to a simple and efficient press block structure and implementation method.

### Background of the Invention

With the rapid development of China's photovoltaic industry, the power generation efficiency of crystalline silicon photovoltaic modules has increased from 10% at the beginning of the 21st century to the current efficiency with a maximum value of more than 25%. At the same time, manufacturing costs have also been declining. At present, crystalline silicon photovoltaic products have decreased by more than 90% in costs compared to more than a decade ago. With process technology upgrading and cost reduction, the end-use market is also booming. Photovoltaic products are gradually changing from industrial equipment to civilian commodities. Building integrated photovoltaics (BIPV) is a technology of applying solar power generation (photovoltaic) products to buildings, making full use of spatial structures of buildings, sheds, and greenhouses, and increasing the power generation function on the basis of conventional shading, temperature control, and rain shelter. BIPV has thus become a hot spot in the future building and photovoltaic technology market.

A press block is required for installation of photovoltaic modules. However, the press block of the prior art has some defects in the process of use, for example:
1. The press block of the prior art is generally pressed above a frame, with the press block protruding on the frame, which makes the appearance incongruous. In addition, when the sun slants in the morning and evening, it will shade the edges of the press block, affecting the working efficiency of the photovoltaic modules. In severe cases, it will cause a local high temperature of the modules (hot spot phenomenon), which will affect the performance of the modules and even lead to a fire.
2. The spacing between frames often exceeds 25 mm because of the existence of the press block, which is a waste of limited laying space.
3. The press block has long torque due to the frame structure, coupled with limited contact area, resulting in a poor fixing effect. Under extreme weather conditions such as typhoons, the photovoltaic modules will fall off due to the unstable fixing of the press block, resulting in loss and even safety problems.
4. Since the press block is pressed above the frame, the frame will also be stressed after a bolt is tightened, which will easily lead to glass burst of the photovoltaic modules.

### Summary of the Invention

One object of the present disclosure is to provide a simple and efficient press block structure to solve the above-mentioned problems set forth in the background. The present disclosure provides a simple and efficient press block structure with the features of being applicable to different thicknesses of frames and reducing installation distances between the frames.

Another object of the present disclosure is to provide an implementation method for the simple and efficient press block structure.

In order to achieve the above-mentioned objects, the present disclosure provides the following technical solutions: A simple and efficient press block structure, including a press block body, where upper and lower surfaces of two ends of the press block body are provided with dense teeth, and a through hole is provided at an intermediate position of the press block body.

Further in the present disclosure, the press block body is an L-shaped structure.

Further in the present disclosure, a projecting height h of an end of the press block body is 0.5 to 10 mm.

Further in the present disclosure, a thickness d of the press block body is 0.5 to 10 mm.

Further in the present disclosure, the press block body is a stainless-steel member.

Further in the present disclosure, a rubber ring is placed under the press block body at a position corresponding to the through hole during installation.

Further in the present disclosure, the press block body is an integrally formed structure.

Further in the present disclosure, a corner of the press block body is a sloping structure.

Further in the present disclosure, an implementation method for the simple and efficient press block structure includes the following steps:
(I), a press block body being an L-shaped structure;
(II), forming a through hole for a bolt to pass through at an intermediate position of the press block body;
(III), forming dense teeth for increasing friction on upper and lower surfaces of two ends of the press block body;
(IV), placing a projecting end downwards in response to the press block body being configured to fix a single frame;
(V), placing the projecting end upwards in response to the press block body being configured to fix between two frames; and
(VI), placing a rubber ring under the press block body at a position corresponding to the through hole during installation.

Further in the present disclosure, in the implementation method for the simple and efficient press block structure, a projecting height h of an end of the press block body is 0.5 to 10 mm; a thickness d of the press block body is 0.5 to 10 mm; the press block body is a stainless-steel member; the press block body is an integrally formed structure; and a corner of the press block body is a sloping structure.

Compared to the prior art, the advantageous effects of the present disclosure are:
1. The press block body of the present disclosure is applicable to the fixing of a single frame or two frames, with better adaptability.
2. The present disclosure is connected to a lower end of the frame so as not to be affected by a thickness of the frame, which is applicable to installation of photovoltaic modules with various frame thicknesses, thereby reducing types of the press block body, and which can avoid pressing above the photovoltaic modules, so as to avoid the glass burst of the photovoltaic modules caused by too tight pressure during installation.
3. After the installation of the present disclosure, the press block body is embedded in the interior of the frame, which is more beautiful in appearance and can avoid reducing the working efficiency of the photovoltaic modules due to shading. Because no shading is involved, the structure of the press block and the setting of the thickness of the press block can be adjusted according to the requirements of the photovoltaic system, and an increase in the thickness can further strengthen the connection strength.
4. The press block body of the present disclosure is embedded in the interior of the frame after the installation, which can reduce the installation spacing between the frame and the frame, improve the utilization rate of space, and also facilitate the later waterproofing or sealing treatment.
5. The press block body of the present disclosure is configured to increase the friction force with the frame by the provided teeth, thereby increasing the stability of installation.
6. During the installation of the present disclosure, a rubber ring is placed under the press block body at a position corresponding to the through hole. The rubber ring can lift up the press block body before tightening the bolt, so as to facilitate the lower part of the frame to be inserted below the press block body. Because the rubber ring is elastic, the setting of the rubber ring will not affect the fixing effect of the press block body.

### Brief Description of the Drawings

Fig. 1 is a schematic diagram showing a structure of the present disclosure;
Figs. 2 to 3 are schematic diagrams showing installation structures of the present disclosure; and
Figs. 4 to 5 are schematic diagrams showing installation structures of Embodiment 2 of the present disclosure.

In the drawings: 1, press block body; 2, through hole; 3, tooth; 4, frame; 5, bolt; 6, rubber ring; and 7, installation rail.

### Detailed Description of the Embodiments

The technical solutions in the embodiments of the present disclosure will be described clearly and completely below in combination with the drawings in the embodiments of the present disclosure. Clearly, the described embodiments are not all but only part of embodiments of the present disclosure. All other embodiments obtained by those ordinarily skilled in the art based on the embodiments in the present disclosure without creative work shall fall within the scope of protection of the present disclosure.

### Embodiment 1

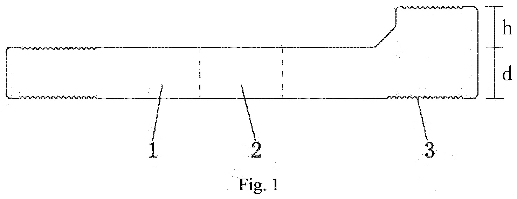

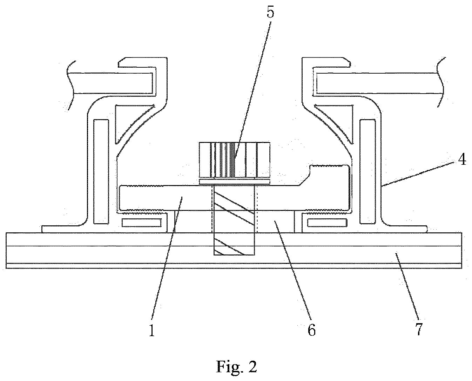

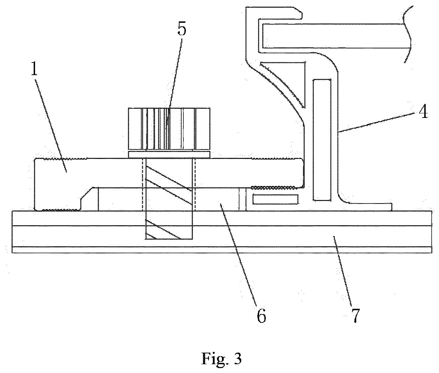

With reference to Figs. 1 to 3, the present disclosure provides the following technical solutions: A simple and efficient press block structure includes a press block body 1, where the press block body 1 is an integrally formed structure; the press block body 1 is a stainless-steel member; a projecting height h of an end of the press block body 1 is 0.5 to 10 mm, preferably 5 mm in the present embodiment; a thickness d of the press block body 1 is 0.5 to 10 mm, preferably 5 mm in the present embodiment; upper and lower surfaces of two ends of the press block body 1 are provided with dense teeth 3; and a through hole 2 is provided at an intermediate position of the press block body 1.

Further, the press block body 1 is an L-shaped structure.

By adopting the above-mentioned technical solutions, the press block body 1 can be configured to fix either a single frame or between two frames, a projecting end being placed downwards in response to fixing the single frame, and the projecting end being placed upwards in response to fixing between the two frames.

Further, a rubber ring 6 is placed under the press block body 1 at a position corresponding to the through hole 2 during installation.

By adopting the above-mentioned technical solutions, the rubber ring 6 can lift up the press block body 1 before tightening the bolt 5, so as to facilitate the lower part of the frame 4 to be inserted below the press block body 1. Because the rubber ring 6 is elastic, the setting of the rubber ring 6 will not affect the fixing effect of the press block body 1.

Further, a corner of the press block body 1 is a sloping structure.

By adopting the above-mentioned technical solutions, the strength of the press block body 1 is better.

### Embodiment 2

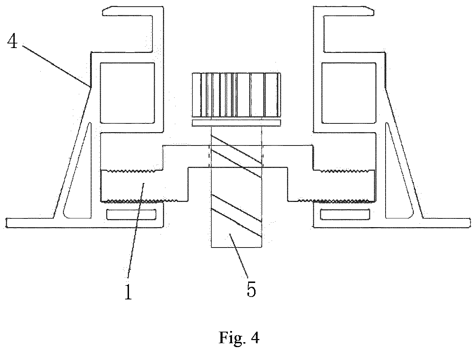

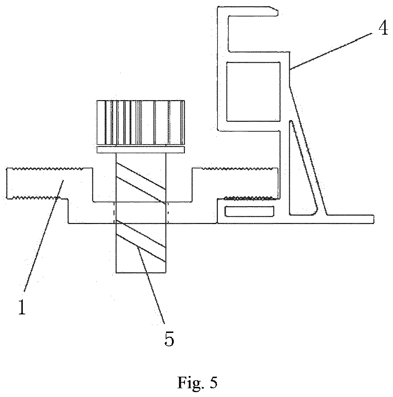

With reference to Figs. 4 to 5, the Embodiment differs from Embodiment 1 in that the press block body 1 may also be designed to a structure as shown in Figs. 4 to 5, with the same installation manner and effects as the L-shaped press block body 1 in Embodiment 1.

Further, an implementation method for the simple and efficient press block structure, provided by the present disclosure, includes the following steps.

At (I), a press block body 1 is an L-shaped structure.

At (II), a through hole 2 for a bolt 5 to pass through is formed at an intermediate position of the press block body 1.

At (III), upper and lower surfaces of two ends of the press block body 1 are provided with dense teeth 3 for increasing friction.

At (IV), a projecting end is placed downwards in response to the press block body 1 being configured to fix a single frame.

At (V), the projecting end is placed upwards in response to the press block body 1 being configured to fix between two frames.

At (VI), a rubber ring 6 is placed under the press block body 1 at a position corresponding to the through hole 2 during installation.

In summary, the press block body 1 of the present disclosure is applicable to the fixing of a single frame or two frames, with better adaptability. The present disclosure is connected to a lower end of the frame 4 so as not to be affected by a thickness of the frame 4, which is applicable to installation of photovoltaic modules with various frame thicknesses, thereby reducing types of the press block body 1, and which can avoid pressing above the photovoltaic modules, so as to avoid the glass burst of the photovoltaic modules caused by too tight pressure during installation. After the installation of the present disclosure, the press block body 1 is embedded in the interior of the frame 4, which is more beautiful in appearance and can avoid reducing the working efficiency of the photovoltaic modules due to shading. The press block body 1 of the present disclosure is embedded in the interior of the frame 4 after the installation, which can reduce the installation spacing between the frame and the frame, improve the utilization rate of space, and also facilitate the later waterproofing or sealing treatment. The press block body 1 of the present disclosure is configured to increase the friction force with the frame by the provided teeth 3, thereby increasing the stability of installation. During the installation of the present disclosure, a rubber ring 6 is placed under the press block body 1 at a position corresponding to the through hole 2. The rubber ring 6 can lift up the press block body 1 before tightening the bolt 5, so as to facilitate the lower part of the frame 4 to be inserted below the press block body 1. Because the rubber ring 6 is elastic, the setting of the rubber ring 6 will not affect the fixing effect of the press block body 1.

While embodiments of the present disclosure have been shown and described, it will be understood by those skilled in the art that various changes, modifications, substitutions, and alterations may be made to these embodiments without departing from the principles and spirit of the present disclosure, the scope of which is defined by the appended claims and their equivalents.

## Claims

1. A simple and efficient press block structure comprising a press block body (1), wherein upper and lower surfaces of two ends of the press block body (1) are provided with dense teeth (3), and a through hole (2) is provided at an intermediate position of the press block body (1).

2. The simple and efficient press block structure according to claim 1, wherein the press block body (1) is an L-shaped structure.

3. The simple and efficient press block structure according to claim 2, wherein a projecting height h of an end of the press block body (1) is 0.5 to 10 mm.

4. The simple and efficient press block structure according to claim 2, wherein a thickness d of the press block body (1) is 0.5 to 10 mm.

5. The simple and efficient press block structure according to claim 1, wherein the press block body (1) is a stainless-steel member.

6. The simple and efficient press block structure according to claim 1, wherein a rubber ring (6) is placed under the press block body (1) at a position corresponding to the through hole (2) during installation.

7. The simple and efficient press block structure according to claim 1, wherein the press block body (1) is an integrally formed structure.

8. The simple and efficient press block structure according to claim 2, wherein a corner of the press block body (1) is a sloping structure.

9. An implementation method for the simple and efficient press block structure according to any one of claims 1 to 8, comprising the following steps:
(I), a press block body (1) being an L-shaped structure;
(II), forming a through hole (2) for a bolt to pass through at an intermediate position of the press block body (1);
(III), forming dense teeth (3) for increasing friction on upper and lower surfaces of two ends of the press block body (1);
(IV), placing a projecting end downwards in response to the press block body (1) being configured to fix a single frame;
(V), placing the projecting end upwards in response to the press block body (1) being configured to fix between two frames; and
(VI), placing a rubber ring (6) under the press block body (1) at a position corresponding to the through hole (2) during installation.

10. The implementation method for the simple and efficient press block structure according to claim 9, wherein a projecting height h of an end of the press block body (1) is 0.5 to 10 mm; a thickness d of the press block body (1) is 0.5 to 10 mm; the press block body (1) is a stainless-steel member; the press block body (1) is an integrally formed structure; and a corner of the press block body (1) is a sloping structure.
